# EUROPEAN PATENT SPECIFICATION

(11) **EP 0 571 370 B1**
(45) Date of publication and mention of the grant of the patent: **01.03.1995**
(21) Application number: 91900582.7
(22) Date of filing: 13.11.1990
(51) Int. Cl.: G03B 27/20

(54) **A CONTACT PRINTER AND A METHOD OF EXPOSING SENSITIZED GRAPHIC ART FILM AND PAPER**
KONTAKTKOPIERGERÄT UND VERFAHREN ZUR BELICHTUNG VON SENSIBILISIERTEN GRAPHISCHEN FILMEN UND PAPIEREN
TIREUSE PAR CONTACT, ET PROCEDE D'EXPOSITION DE FILMS ET DE PAPIER D'ART GRAPHIQUE SENSIBILISES

(30) Priority: 17.11.1989 US 438564; 17.11.1989 US 438565
(43) Date of publication of application: 01.12.1993
(73) Proprietor: EASTMAN KODAK COMPANY, Rochester, New York 14650-2201 (US)
(72) Inventor: JONES, Robert, Seth, Rochester, NY 14616 (US); MAURER, John, Joseph, Rochester, NY 14617 (US)
(74) Representative: Blickle, K. Werner, Dipl.-Ing.
(86) International application number: US9006636
(87) International publication number: WO9107693

(56) References cited:
- GB-A- 1 116 151
- US-A- 2 988 979
- PATENT ABSTRACTS OF JAPAN, vol. 14, no. 317 (P-1073)(4260), 9 July 1990 ; & JP-A-2103523

## Description

### Background of the Invention

Contact printing or exposure is a traditional graphic arts procedure for generating same size, high resolution reproductions of line and halftone film images. This technique ensures faithful original film image reproduction by placing the original film image in intimate contact with a receiving film or paper emulsion and, in the presence of a vacuum to hold them in intimate contact throughout the exposing process, exposing through the original film image to the receiving film or paper by means of a point or reflected light source. Typically, these images are of a relatively large size in order to meet the needs of the graphic arts industry and thus require large format originals and receiving films and the equipment necessary to handle such sized films.

Traditional silver halide contact films have sufficient photographic visible light sensitivity that the contacting exposure can be carried out with a simple, low cost, low energy tungsten light source. However, because of the sensitivity of these films to visible light, the contact exposure must be carried out in a darkroom environment. This causes a major inconvenience for the operator and results in a loss of productivity in the graphic arts production process.

In an attempt to improve graphic arts contact exposure productivity, film manufacturers have developed normal roomlight handling contact films. These films are photographically very insensitive to visible light, but have a relatively high UV sensitivity (although, in fact, having a relatively low UV sensitivity compared to the UV sensitivities of darkroom-handled film). These roomlight-handled films have improved the productivity of graphic arts contact exposure operations by eliminating the bottlenecks of the darkroom environment. However, they have also increased the use of high intensity, expensive, high UV output light sources. Metal halide lig are a common type of UV light source used to expose these films.

One of the most important aspects of the graphic arts contact exposing or printing process is the need for accurately reproducing very fine lines and halftone dots. This has resulted in the requirement that the exposing light be collimated at the exposing plane so that such lines and dots can be reproduced accurately without undercutting or spreading and changing the size of the reproduced line or dot and the resulting image. Adequate light collimation has been achieved in the past by using a point light source mounted at a sufficiently great distance from the exposing plane that the light is substantially collimated by the time it reaches the exposure plane.

Given the large exposing plane area necessary for graphic arts purposes, the need for a high degree of light collimation to achieve accurate image reproduction, and the relative low photographic UV sensitivities of roomlight handling contact films, a high energy, expensive metal halide source has heretofore been required to expose these films. These high intensity UV light sources have required that the operator be shielded from the light source to avoid exposure to harmful UV radiation. Examples of such arrangements are illustrated in U.S. Patent Nos. 4,029,404, 4,316,669, and 4,437,759. As a result, the total volume of space required for the graphic arts contact exposing set-ups of the prior art has been large and, since most printing shops have more than one of these exposing set-ups, the total volume of space required is significant.

U.S. Patent No. 2,988,979 discloses a contact printer which includes a vacuum table and a clamping frame for applying a transparent cover sheet over the film and original. A light carrier is arranged to move an exposure light over the film and original after the clamping frame has covered the film and original. This sequential operation reduces the procuctivity of this devices.

Thus, a contact printer which is of compact size, provides the desired accurate reproduction of graphic arts images, and is relatively simple and low cost, all the while providing the requisite productivity, would find ready acceptance in the graphic arts industry.

### Summary of the Invention

Accordingly, the present invention provides a contact printer comprising a vacuum table (14) for supporting in superposed relationship a light sensitive receiving film (18) and an at least partially transparent original film (20) containing an image to be reproduced, lamp means (32) comprising an elongated light source for exposing the receiving film through the original film (20), means (16) for moving the lamp means (32) transversely of the length of the light source over the surface of the vacuum table when the superposed films (18, 20) are arranged on the table whereby the superposed films (18, 20) are scanned by the lamp means (32) so that the receiving film (13) is exposed through the original film (20) by the light source, a transparent cover sheet (36) which is arranged to be placed over the original film (20) so as to hold this film (20) in intimate contact with the receiving film (18), and means (38, 52) for moving the transparent cover sheet (36) into or out of contact with the original film (20) after exposure of the receiving film (18). The invention is characterized in that the cover sheet moving means (38, 52) is coupled with the lamp moving means (16) in such a manner that when the lamp moving means (32) is moved from a starting position across the superposed films (18, 20) to an end position and back again, the applying of the transparent cover sheet (36) and the removing of the transparent cover sheet (36) is effected in synchronism with the scanning movement of the lamp means (32) from the starting position to the end position and from the end position back to the starting position, respectively.

Still further, the present invention provides a method of contact printing comprising the steps of arranging in superposed relationship a light sensitive receiving film (18) and an at least partially transparent original film (20) containing an image to be reproduced on a vacuum table (14), moving a lamp means (32) comprising an elongated light source over the surface of the vacuum table thereby scanning the superposed films (18, 20) so that the receiving film (18) is exposed through the original film (20) by the light source, applying a transparent cover sheet (36) over the superposed films (18, 20) before the actual exposure to hold them in intimate contact with each other, and removing the transparent cover sheet (36) after the exposure. The invention is characterized in that the moving of the lamp involves moving the lamp from a starting position across the films (18, 20) to an end position and back again and in that the steps of applying the transparent cover sheet (36) and of removing the transparent cover sheet (36), are effected in synchronism with the scanning movement of the lamp means (32) from the starting position to the end position and from the end position to the starting position, respectively.

### Brief Description of the Drawings

Fig. 1 is a perspective view of a preferred embodiment of the present invention;
Fig. 2 is a cross-sectional view of the light trolley taken along line 2-2 or Fig. 1;

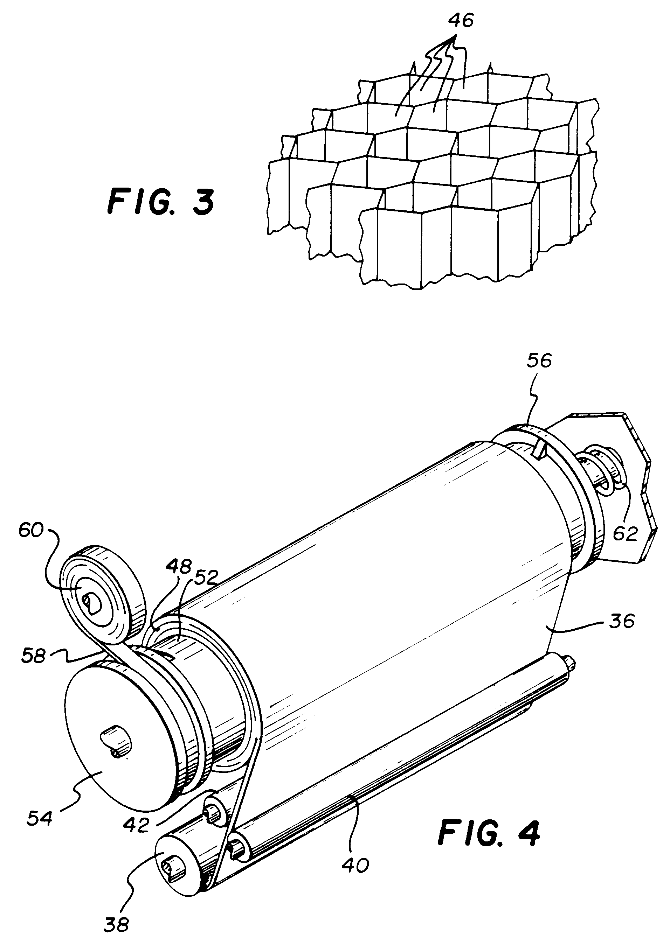

Fig. 3 is a perspective view of a portion of the light; and
Fig. 4 is a perspective view of the cover sheet applying assembly.

### Description of the Preferred Embodiment

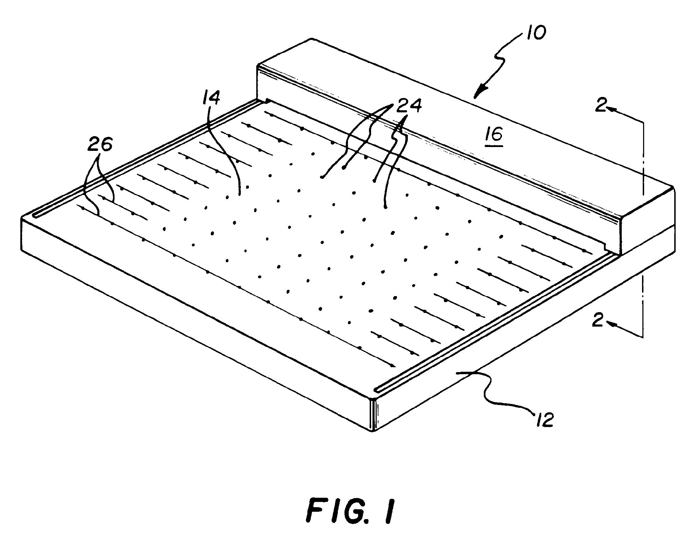

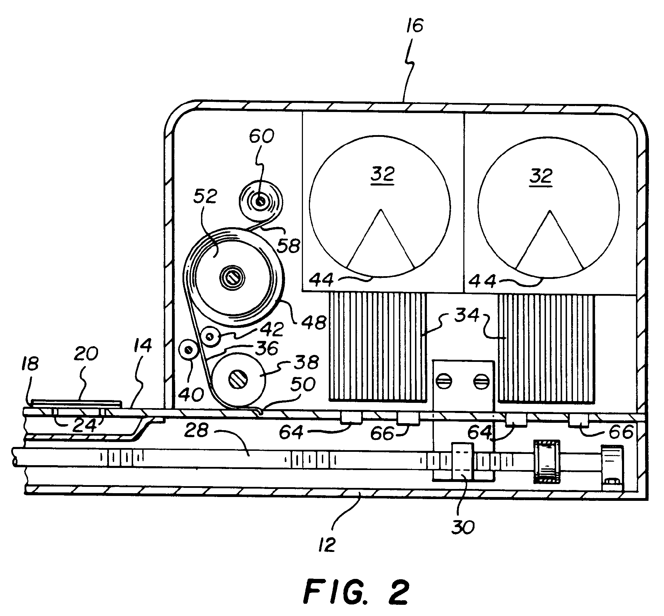

Referring now to Figs. 1 and 2, a preferred embodiment of a contact printer 10 of the present invention is illustrated. The contact printer comprises a platen member 12 having a planar upper surface 14 with dimensions slightly larger than the maximum dimensions of the largest original to be copied thereon. A light carriage 16, having a length approximately equal to one dimension of the platen member 12, is arranged to be moved across the platen transversely to the length of the carriage, thereby providing coverage of the entire platen during its movement.

The upper surface of the platen member 14 forms a vacuum table for the film 18 and the original 20 which are superposed thereon for exposure of the film (see Fig. 2). A rigid chamber 22, having a thickness of approximately 2.54 cm (one inch), is formed beneath the vacuum table. A plurality of vacuum ports 24 are formed in the film/original accepting portion of the surface 14 and communicate between the surface and the interior of the chamber. With the exception of the vacuum ports 24, the chamber 22 is sealed so that a vacuum pump (not shown, but normally disposed remote from the apparatus) can pull a vacuum within the chamber which is then applied, via ports 24, to the film and original which are placed on the surface 14. The ports 24 have a diameter of approximately 1.0 mm (0.040 inch) which is sufficiently large to effectively apply the vacuum to the film/original disposed on the surface 14, but is sufficiently small and the capacity of the vacuum pump is great enough that it will maintain the vacuum even though the size of the film/original is less than the maximum, leaving some of the vacuum ports uncovered. The vacuum ports outside of the area covered by the maximum size film/original are connected by shallow grooves 26 having a cross section of 0.4 mm x 0.4 mm (0.015 inch by 0.015 inch) which permit air trapped between the film/original and a cover sheet (to be further described hereinbelow) to be evacuated. It has been found that satisfactory operation can be achieved with a vacuum pump which is capable of flow rates of between 7.1 and 14 l/s (15 and 30 cfm) while generating a vacuum within the chamber of between 205 mm and 307 mm (8 and 12 inches) of water.

The light carriage 16 is disposed on the upper surface of the vacuum table and is arranged to be moved across the table from a home position (the rear of the vacuum table in the example illustrated) to the opposite edge of the table, and returned to the home position. The carriage is provided with wheels (not shown) at each end thereof which ride upon tracks (not shown) provided at the lateral edges of the platen surface 14 or within the platen. The carriage is driven by a drive screw 28 within and extending the length of the platen which engages and drives a drive-nut 30 connected to the carriage. The drive screw is driven by a variable speed, reversible motor (not shown) located within the platen.

The light carriage 16 carries one or more high UV output fluorescent aperture lamps 32, with an associated mechanical light collimator 34 positioned beneath each lamp, a roll of a transparent cover sheet 36, an associated pressure roller 38, and a pair of cleaner rolls 40 and 42.

The fluorescent lamps 32 are long tubular bulbs extending the length of the carriage. The phosphors which coat the inner walls of the bulbs are selected to generate light having a wavelength in the range of 350nm to 460nm, which matches the sensitivity of the film being exposed. The bulbs have an internal reflective layer between the phosphor and the envelope glass which covers a major angular portion of the envelope wall and reflects a high percentage of the radiation striking it. A clear window 44, having an aperture of about 60° of the bulb circumference, is provided along the length of the bulb with no phosphor or reflective layer. This window produces an elongated, concentrated beam of high luminance UV light output along the length of the bulb because the reflective coating directs the major part of the bulb output through the uncoated window. The lamps are selectively oriented in the carriage with the windows 44 directed downwardly so that the beam of concentrated light is directed toward the sensitized film material 18.

It has been found that, since there is a limit to the amount of exposing energy each bulb can produce, with slower speed films the exposure times become excessively long with only one bulb. Also, the use of only one bulb reduces the dynamic exposure range available to produce such effects as spread and choke. Two bulbs provide a more stable exposing device and reduce the total time of scanning necessary for proper exposure. More than two bulbs may be used to enhance productivity by permitting faster scanning speeds for slower speed films. However, the use of additional bulbs will increase the amount of heat produced thereby, requiring the use of means to enhance the heat removal, such as a fan (not shown).

The mechanical light collimator 34 associated with each bulb comprises a plurality of parallel, fine collimator tubes 46 which are closely spaced and which transmit parallel rays of light from the fluorescent aperture lamp to the exposure plane. While the optimum tube shape for the light collimator is a cylinder, because it gives uniform image quality in all directions, it has been found that tubes having a hexagonal cross section provide close approximation to the cylinder, are easier to fabricate, and provide greater useful area for light transmission as a light collimator. The inner surface of the tubes are provided with a non-reflective black coating whereby light rays which are not parallel to the tube axes are absorbed. Inasmuch as image quality is related to the solid angle of the light incident on the original/film lamination surface, based on a given distance between the sensitized film emulsion and the image of the original, the equivalent diameter of the tubes and their length are selected to extinguish incident angles of light at the exposure plane greater than a predetermined solid angle, for example a solid angle of between about 3° and about 9°. Moreover, since the illumination at the film surface depends upon the light output of the lamp and the distance of the lamp from the film surface, for a given lamp output, the shorter the length of the collimator, the greater the exposure power at the film. A preferred embodiment employs hexagonal tubes having an equivalent diameter of 3.2 mm (0.125 inch) and a length of 12.7 mm (0.5 inch), with the bottom of the tube spaced above the film plane a distance of 12.7 mm (0.5 inch).

The transparent cover sheet 36 has dimensions substantially equal to the width and length of the vacuum table and is supported as a roll 48 mounted in the carriage 16 parallel with and ahead of the fluorescent tubes (as viewed with respect to the initial travel of the carriage). The outer, free end of the cover sheet is releasably connected to the vacuum table as indicated at 50. The cover sheet is wrapped on a core 52 which is removably held at each end by hub members, 54 and 56, rotatably mounted in the carrier. One hub 54 is connected to one end of a constant force tension spring 58 which acts to apply tension to the roll of the cover sheet material as it is unwound and wound by movement of the carriage across the vacuum table, as will be further described hereinbelow. The other end of the tension spring is connected to and wrapped on a storage drum 60 where it remains in its idle position. Through the unwinding force generated as the cover sheet is unwound, the spring is transferred onto the core hub 54, and produces the winding torque moment to the shaft of the core to rewind the cover sheet when the carriage movement is reversed. The other hub 56 is spring loaded along the core axis by an axial compression spring 62. The axial compression spring permits the hub 56 to be moved axially, disengaging the cover sheet roll to permit its easy replacement.

The cover sheet 36 is formed of an impermeable sheet of a polymeric material having substantially transparent to UV radiation. The material also preferably resists abrasion and possesses anti-static properties, or is treated to obtain these properties, so that it resists the accumulation of dust, dirt, and other materials which would adversely affect the transmission of exposing light therethrough, or which would adversely affect the collimation of the light. It has been found that clear polyester sheeting having a thickness of approximately 0.1 mm (0.004 inch) satisfactorily meets these requirements. The cover sheet acts as a "vacuum lid" as it is unwound over the original/film laminate during vacuum drawdown as the carriage is moved across the vacuum table to expose the film. The cover sheet also protects the original/film laminate underneath from any abrasive action of the pressure roller 38 as it forces the cover sheet/original/film lamination into intimate contact to remove any air from the lamination which might otherwise distort the resulting exposure.

Because of its importance to the satisfactory exposure of the contact print, the cover sheet can be cleaned with a soft cloth if necessary, or be replaced if it loses its transparency or becomes damaged. As an aid to keeping the cover sheet optically clean and free from dust and lint, the cleaner rolls 40 and 42 are mounted transversely of the light carriage 16 between the cover sheet roll 48 and the pressure roller 38 in engagement with the front and rear surfaces of the cover sheet 36. The cleaner rolls are formed of a single component urethane having 20 durometer Shore A hardness which clean the cover sheet without scratching as it is extended and retracted during each exposure cycle.

Should it be desired to use registration pins to hold the film and the image-bearing separations or originals in proper alignment during exposure, cooperating clearance holes (not shown) can be provided in the cover sheet 36. The clearance holes allow the cover sheet to lie flat around the registration pins as it is unwound over the original/film laminate.

### Exposure Control

A pair of photocells, 64 and 66, are provided for each fluorescent bulb and are disposed in the upper surface of the vacuum table under each bulb when the light carriage 16 is in the "home" position as illustrated in Fig. 2. The photocells monitor each fluorescent aperture bulb continuously when the light carriage is in home position. Each photocell collects energy over a limited bandwidth from the light source and feeds the exposure intensity level to a microprocessor (not shown). One photocell is used to monitor the higher UV spectrum (350 nm to 410 nm) and the other is used to monitor the "blue" band spectrum (410 nm to 460 nm). The dual system allows more accurate control over the exposure of a particular film or paper. Since the photocells can detect lamp changes and optical degradations, the microprocessor can use the information to keep the exposure levels consistent. The photocell system can also be used to indicate when maintenance is required, such as cleaning the bulbs or replacing them.

The output of each photocell is an analog voltage signal which is proportional to the intensity of the light received by the photodiode and, in the preferred example, can range from 0 to +10 volts. An input device is provided (not shown) to register the photographic speed of the film being exposed. These signals go to an analog/digital converter in the microprocessor, with the digital values being used to calculate the proper speed for the light carriage containing the fluorescent lamps across the exposure plane to provide the necessary exposure to the film. The resulting output is then used to control the light carriage drive motor speed.

### Operation

Initially, the light carriage 16 is parked at the rear of the vacuum table 14. A sheet of film or paper 18 is positioned emulsion side-up on the platen. The longest sheet dimension is preferably perpendicular to carriage motion to minimize the carriage travel necessary to fully cover the sheet and thus keep the time required to a minimum. The vacuum pump is activated and applies the vacuum to the film through the ports 24 to hold the film to the platen surface. The original 20, such as a color separation, is then placed on top of the film. The separation can be positioned by means of registration pins (not shown). If registration pins are used, they are located along the edge of the original/film laminate closest to the carriage home position. The type of film or paper to be exposed, or the exposure speed thereof, is entered into the machine controller. The film information and lamp intensity readings are then used to calculate the carriage traverse speed. When the "start" button is actuated, the carriage 16 moves forward toward the front edge of the platen 14 at the proper dot-for-dot exposure speed. While the carriage moves forward, the clear anti-static cover sheet 36 is unwound to cover the original/film lamination. The pressure roller 38 pushes out any remaining air from the lamination and the cover sheet is drawn into intimate contact with the lamination by the vacuum through the ports 24. The carriage continues until the "end of travel" position is reached and reverses direction to finish exposing the film and return to the home position. As the carriage returns to the home position, the cover sheet 36 is rewound on the core 52 by the constant tension spring 58, uncovering the original/film lamination after exposure for that area has been completed. It is apparent that with small film sizes, complete traverse of the platen by the carriage is not necessary. The "end of travel" position is selectable and can be specified by the user. When the carriage is back at home position, the vacuum and the lamps are shut off or placed on standby, and the film and separation can be removed.

### Alternative Embodiments

The preferred embodiment of the present invention has been illustrated as configured to rest on a table top or workbench. It will be apparent that it would be possible to construct the present invention as a stand alone device. The platen could be folded up or down when not in use.
Alternatively, the present invention could be wall mounted. The wall mount version could be used where space is at a premium or in multi-functional work areas.

It will be further apparent that the present invention can be configured so that the light carriage moves from side to side rather than from back to front. Still further, the cover sheet can be formed of a material which is only transparent to UV radiation. Other forms of the cover sheet cleaner rolls may also be employed. Similarly, the drive screw can be replaced by suitable drive belts, chains, or cables.

In situations where the quantity of exposure lumination is more critical than the collimation of the light at the exposure plane, it is possible to use collimation tubes which are provided with reflecting inner surfaces. Such reflective tubes would provide greater lumination at the exposure plane than the blackened tubes of the preferred embodiment, but would not provide as much collimation. Further, it is possible to construct the light carriage to permit the easy substitution of one type of collimator for another, depending upon the particular requirements at the time.

Accordingly, it will be seen that the present invention provides a contact printer which simultaneously exposes sensitized material and draws a vacuum between the original and the film. The printer employs a short optical light path, made possible by the mechanical light collimator, which is both compact and inexpensive, and which produces substantially parallel light rays in a short distance. The use of the compact mechanical light collimator, along with the high output aperture bulbs, permits the present compact contact printer arrangement which produces the required graphic arts quality contact printing without the resultant undercutting found in devices of the prior art. Also, the use of the "top down" exposure configuration, wherein the film to be exposed is the element directly held in contact with the vacuum table, facilitates the use of a plurality of originals, each containing a different image to be imparted to the film, to expose a single film. Thus a composite image can be more easily created since the film can be left in position after a first exposure, with the first original being removed and replaced with another "original", without the necessity of reregistering the film. Still further, the volume of space occupied by the contact printer of the present invention is substantially reduced from that required by contact printers of the prior art without increasing the risk of exposing the operator to UV radiation.

Moroever, with the present invention a variety of graphic art films and papers can be used without requiring extensive adjustments or modifications. Thus, the present invention provides a method of contact printing and apparatus which is versatile in that it is easily adaptable to a wide variety of films having other spectral sensitivities, e.g. infrared-sensitive film, x-ray films, orthochromatic films, etc., such as by changing the bulbs for bulbs having the appropriate light-emitting characteristics and suitable adjustments to the apparatus control. Accordingly, the apparatus of the present invention provides a graphic arts contact printer which would easily fit into the production environment, providing high productivity, high quality images, adaptability, compact size, and low cost.

## Claims

1. A contact printer comprising
a vacuum table (14) for supporting in superposed relationship a light sensitive receiving film (18) and an at least partially transparent original film (20) containing an image to be reproduced,
lamp means (32) comprising an elongated light source for exposing said receiving film (18) through said original film (20),
means (16) for moving said lamp means (32) transversely of the length of said light source over the surface of said vacuum table (14) when said superposed films (18, 20) are arranged on said vacuum table whereby said superposed films (18, 20) are scanned by said lamp means (32) so that said receiving film (18) is exposed through said original film (20) by said light source,
a transparent cover sheet (36) which is arranged to be placed over the original film (20) so as to hold this film (20) in intimate contact with the receiving film (18), and
means (38, 52) for moving said transparent cover sheet (36) into or out of contact with said original film (20) after exposure of said receiving film (18),
characterized in that the cover sheet moving means (38, 52) is coupled with said lamp moving means (16) in such a manner that when said lamp moving means (32) is moved from a starting position across said superposed films (18, 20) to an end position and back again, the applying of the transparent cover sheet (36) and the removing of the transparent cover sheet (36) is effected in synchronism with the scanning movement of the lamp means (32) from the starting position to the end position and from the end position back to the starting position, respectively.

2. A contact printer according to claim 1 characterized in that said receiving film (18) is sensitive to ultraviolet radiation and said light source (32) generates high intensity ultraviolet radiation.

3. A contact printer according to claim 1 characterized in that means (34) associated with said lamp moving means (16) is provided for collimating the light from said lamp means (32), said collimating means being disposed between said lamp and said cover sheet (36) and being carried by said lamp moving means.

4. A contact printer according to claim 1 characterized in that means (64, 66) is provided for sensing the light intensity from said lamp means (32) at the vacuum table surface (14), means is provided for registering the exposure speed of said film, and means is provided for regulating the speed of said lamp moving means (16) in response to the exposure speed of the film and the sensed intensity of said light whereby said lamp moving speed is varied in direct relationship with said light intensity and said exposure speed.

5. A method of contact printing comprising the steps of
arranging in superposed relationship a light sensitive receiving film (18) and an at least partially transparent original film (20) containing an image to be reproduced on a vacuum table (14),
moving a lamp means (32) comprising an elongated light source over the surface of said vacuum table thereby scanning said superposed films (18, 20) so that said receiving film (18) is exposed through said original film (20) by said light source,
applying a transparent cover sheet (36) over said superposed films (18, 20) before the actual exposure to hold them in intimate contact with each other, and
removing the transparent cover sheet (36) after the exposure,
characterized in that the moving of the lamp means involves moving the lamp means from a starting position across the films (18, 20) to an end position and back again and in that the steps of applying the transparent cover sheet (36) and of removing the transparent cover sheet (36), are effected in synchronism with the scanning movement of the lamp means (32) from the starting position to the end position and from the end position to the starting position, respectively.

## Patentansprüche

1. Kontaktkopierer mit
einer Unterdruckauflage (14) zum Halten eines lichtempfindlichen Aufnahmefilms (18) und eines darüberliegenden zumindest teilweise lichtdurchlässigen Vorlagenfilms (20) mit einem zu reproduzierenden Bild,
einer eine langgestreckte Lichtquelle aufweisenden Lampe (32) zum Belichten des Aufnahmefilms (18) durch den Vorlagenfilm (20) hindurch,
einer Vorrichtung (16), die die Lampe (32) quer zur Länge der Lichtquelle über die Oberfläche der Unterdruckauflage (14) bewegt, wenn die übereinanderliegenden Filme (18, 20) auf der Unterdruckauflage angeordnet sind und von der Lampe (32) derart abgetastet werden, daß der Aufnahmefilm (18) von der Lichtquelle durch den Vorlagenfilm (20) hindurch belichtet wird,
einem lichtdurchlässigen Deckblatt (36), das so angeordnet ist, daß es auf dem Vorlagenfilm (20) liegt und diesen in enger Berührung mit dem Aufnahmefilm (18) hält, und
Mitteln (38, 52), die nach der Belichtung des Aufnahmefilms (18) das lichtdurchlässige Deckblatt (36) in Berührung und außer Berührung mit dem Vorlagenfilm (20) bringen,
**dadurch gekennzeichnet, daß** die Mittel (38, 52) mit der Vorrichtung (16) zum Bewegen der Lampe derart gekoppelt sind, daß wenn die Lampe (32) von einer Ausgangsstellung über die übereinanderliegenden Filme (18, 20) hinweg in eine Endstellung und zurück bewegt wird, das lichtdurchlässige Deckblatt (36) aufgebracht und entfernt wird, während gleichzeitig die Abtastbewegung der Lampe (32) von der Ausgangs- in die Endstellungstellung bzw. von der Endzurück in die Ausgangsstellung erfolgt.

2. Kontaktkopierer nach Anspruch 1, dadurch gekennzeichnet, daß der Aufnahmefilm (18) für ultraviolette Strahlung empfindlich ist und die Lampe (32) ultraviolette Strahlung hoher Intensität erzeugt.

3. Kontaktkopierer nach Anspruch 1, dadurch gekennzeichnet, daß ein der Vorrichtung (16) zum Bewegen der Lampe zugeordnetes Mittel (34) vorgesehen ist, das das von der Lampe (32) abgegebene Licht kollimiert und zwischen der Lampe und dem von der Vorrichtung zum Bewegen der Lampe getragenen Deckblatt (36) angeordnet ist.

4. Kontaktkopierer nach Anspruch 1, gekennzeichnet durch Mittel (64, 66), die die Intensität des von der Lampe (32) abgegebenen Lichts auf der Oberfläche der Unterdruckauflage (14) messen, Mittel, die die Empfindlichkeit des Films aufzeichnen, und Mittel, die die Geschwindigkeit der Vorrichtung (16) zum Bewegen der Lampe in Abhängigkeit von der Empfindlichkeit des Films und der Intensität des von der Lampe abgegebenen Lichts steuern, wodurch sich die Geschwindigkeit, mit der sich die Lampe bewegt, in direktem Verhältnis zur Lichtintensität und zur Filmempfindlichkeit verändert.

5. Verfahren zum Herstellen von Kontaktkopien, bei dem
auf einer Unterdruckauflage (14) ein lichtempfindlicher Aufnahmefilm (18) und ein zumindest teilweise lichtdurchlässiger Vorlagenfilm (20) mit einem zu reproduzierenden Bild übereinanderliegend angeordnet werden,
eine eine langgestreckte Lichtquelle aufweisende Lampe (32) über die Oberfläche der Unterdruckauflage bewegt wird, wobei die übereinanderliegenden Filme (18, 20) derart abgetastet werden, daß der Aufnahmefilm (18) von der Lichtquelle durch den Vorlagenfilm (20) hindurch belichtet wird,
ein lichtdurchlässiges Deckblatt (36) vor der eigentlichen Belichtung derart auf die übereinanderliegenden Filme (18, 20) aufgebracht wird, daß sie in enger Berührung miteinander gehalten werden, und
nach der Belichtung das lichtdurchlässige Deckblatt (36) entfernt wird,
**dadurch gekennzeichnet, daß** die Lampe von einer Ausgangsstellung über die Filme (18, 20) hinweg in eine Endstellung und zurück bewegt wird und daß das Aufbringen und Entfernen des lichtlässigen Deckblatts (36) gleichzeitig mit der Abtastbewegung der Lampe (32) von der Ausgangs- in die Endstellungstellung bzw. von der End- zurück in die Ausgangsstellung erfolgt.

## Revendications

1. Tireuse par contact, comprenant
une table aspirante (14) pour maintenir en superposition un film récepteur (18) sensible à la lumière et un film original (20) au moins partiellement transparent contenant une image à reproduire,
des moyens d'éclairement (32) comprenant une source lumineuse allongée pour exposer ledit film récepteur (18) au travers dudit film original (20),
un agencement (16) pour déplacer les moyens d'éclairement (32) transversalement à la longueur de ladite source lumineuse au-dessus de la surface de ladite table aspirante (14) lorsque les films (18, 20) superposés sont disposés sur ladite table afin de balayer lesdits films (18, 20) avec les moyens d'éclairement de manière à exposer ledit film récepteur à la source lumineuse au travers dudit film original,
une feuille de couverture (36) transparente, agencée de manière à être disposée au-dessus du film original (20) afin de maintenir ce film (20) en contact étroit avec le film récepteur (18), et
un dispositif (38, 52) pour mettre ladite feuille de couverture transparente (36) en contact avec le film original (20) ou l'éloigner de ce dernier après exposition dudit film récepteur (18),
et caractérisée en ce que ledit dispositif (38, 52) est relié avec ledit agencement (16) de manière que lorsque les moyens d'éclairement (32) sont déplacés d'une position d'origine à une position d'extrémité en passant au-dessus desdits film superposés (18, 20) puis reviennent à leur position d'origine,
l'application de la feuille de couverture transparente (36) et l'éloignement de cette feuille de couverture sont réalisés en synchronisme avec le déplacement de balayage des moyens d'éclairement (32) de la position d'origine à la position d'extrémité et de la position d'extrémité à la position d'origine, respectivement.

2. Tireuse selon la revendication 1, caractérisée en ce que le film récepteur (18) est sensible au rayonnement ultraviolet et la source lumineuse (32) produit un rayonnement ultraviolet d'intensité importante.

3. Tireuse selon la revendication 1, caractérisée en ce qu'elle comprend des moyens (34) associés audit agencement (16) pour collimater la lumière desdits moyens d'éclairement (32), lesdits moyens de collimation étant disposés entre ladite source et ladite feuille de couverture (36) et étant portés par ledit agencement.

4. Tireuse selon la revendication 1, caractérisée en ce qu'elle comprend des moyens (64, 66) pour mesurer l'intensité lumineuse provenant des moyens d'éclairement (32) au niveau de la surface de ladite table aspirante (14), des moyens pour enregistrer la rapidité dudit film récepteur, et des moyens pour réguler la vitesse de déplacement dudit agencement (16) en fonction de la rapidité du film récepteur et de l'intensité lumineuse mesurée afin de faire varier la vitesse de déplacement de la source en fonction directe de l'intensité lumineuse et de la rapidité.

5. Procédé de tirage par contact comprenant les étapes suivantes :
disposer en superposition, sur une table aspirante, un film récepteur (18) sensible à la lumière et un film original (20) au moins partiellement transparent et contenant une image à reproduire,
déplacer des moyens d'éclairement (32) comprenant une source lumineuse allongée au-dessus de la surface de ladite table aspirante afin de balayer lesdits films (18, 20) superposés de manière que le film récepteur (18) soit exposé à la source lumineuse aux travers dudit film original (20),
appliquer une feuille de couverture transparente (36) sur lesdits film (18, 20j superposés avant l'exposition de manière à maintenir lesdits films en contact l'un avec l'autre, et
éloigner ladite feuille de couverture desdits films après l'exposition,
caractérisé en ce que le déplacement des moyens d'éclairement implique le déplacement desdits moyens d'une position d'origine à une position d'extrémité au-dessus desdits films (18, 20) et le retour à la position d'origine et en ce que les étapes consistant à appliquer ou éloigner ladite feuille de couverture (36) sont réalisées en synchronisme avec le mouvement de balayage des moyens d'éclairement (32) de leur position d'origine à leur position d'extrémité et de leur position d'extrémité à leur position d'origine, respectivement.
